# FASCICULE DE BREVET EUROPEEN

(11) **EP 0 536 222 B1**
(45) Date de publication et mention de la délivrance du brevet: **14.09.1994**
(21) Numéro de dépôt: 91911856.2
(22) Date de dépôt: 20.06.1991
(51) Int. Cl.: C08F 8/50, C08F 210/02

(54) **PROCEDE DE TRAITEMENT DE POLYMERES A BASE D'E.V.A. RETICULE ET APPLICATIONS**
VERFAHREN ZUR BEHANDLUNG VON POLYMEREN AUF BASIS VON VERNETZTEM E.V.A. UND DEREN VERWENDUNG
METHOD FOR TREATING CROSS-LINKED EVA-BASED POLYMERS, AND USES THEREOF

(30) Priorité: 26.06.1990 FR 9008425
(43) Date de publication de la demande: 14.04.1993
(73) Titulaire: ENTREPRISE "MALET", F-31081 Toulouse Cédex (FR)
(72) Inventeur: BORREDON, Elisabeth, F-31670 Tournefeuille (FR); DELMAS, Michel, F-31320 Auzeville-Tolosane (FR); GASET, Antoine, F-31000 Toulouse (FR); FAHIMI, Akbar Appartement 44 Résidence des, F-31400 Toulouse (FR); ABDENNADHER, Mohamed 10, allées des Jasmins, F-31520 Ramonville-Saint-Agne (FR); RAYNAUD, Gilbert, F-31600 Muret (FR); JAKUBOWSKI, Marc, F-31500 Toulouse (FR)
(74) Mandataire: Barre, Philippe
(86) Numéro de dépôt international: FR9100499
(87) Numéro de publication internationale: WO9200334

(56) Documents cités:
- EP-A- 0 028 384
- FR-A- 2 292 715
- US-A- 4 118 427

## Description

L'invention concerne un procédé de traitement de matériaux polymères à base d'E.V.A. réticulé (éthylène vinyl acétate vulcanisé) en vue d'obtenir des fragments polymériques de masse moléculaire inférieure. Le procédé de l'invention s'applique en particulier au traitement de déchets à base d'E.V.A. (déchets des industries de la chaussure...) en vue de leur valorisation, notamment comme agent texturant, liant d'enrobage, ou matière première.

Les polymères à base d'E.V.A. réticulé sont des composés très spécifiques, de par leur structure non linéaire tridimensionnelle et les liaisons covalentes fortes qui assurent la cohésion du réseau tridimensionnel. Ces composés sont insolubles en milieu aqueux et dans tous les solvants organiques.

A l'heure actuelle, dans de nombreuses industries notamment dans l'industrie de la chaussure, sont rejetées des quantités non négligeables de déchets à base des composés réticulés sus-évoqués et il n'existe aucun procédé permettant de les déréticuler pour les rendre solubles en vue d'un recyclage. En conséquence, compte tenu des problèmes de nuisance que ces composés entraînent (très difficilement dégradables), ils sont actuellement détruits essentiellement par pyrolyse ou combustion.

La difficulté pour déréticuler ces composés provient de l'existence des liaisons covalentes fortes dans le réseau tridimensionnel : ces liaisons sont difficiles à casser sans détruire totalement la molécule en une diversité de petites molécules inutilisables.

Par ailleurs, l'ozone est déjà utilisé pour transformer certains polymères purs en les oxydant, par exemple le polyéthylène ou les polyoléfines. De tels procédés d'ozonation sont décrits dans les publications suivantes : brevet FR 1 472 411 ; B. BOUTEVIN et al., Ozonisation du polyéthylène Eur. Polym. J. Vol 20 n° 9 pp 875-878, 1984 ; brevet US 4.118.427 ; brevet FR 2.292.715. Toutefois, de tels procédés visent des polymères purs non réticulés qui sont de nature très différente de ceux visés par l'invention et qui sont en particulier solubles (certains procédés travaillant en milieu aqueux) et ont pour objectif d'oxyder ces polymères en vue de les fonctionnaliser ultérieurement. Ces documents antérieurs ne fournissent aucun enseignement concernant une déréticulation de polymères à base d'E.V.A. vulcanisé. Par exemple, le brevet US 4.118.427 décrit une dépolymérisation totale d'un polymère soluble dont la masse moléculaire est de 80 000, conduisant à des petites molécules de masse moléculaire de l'ordre de 1000 à 2000 qui n'ont plus les caractéristiques physico-chimiques du polymère de départ.

La présente invention se propose de fournir un procédé de traitement de matériaux polymères à base de E.V.A. réticulé en vue de transformer ce matériau en fragments polymériques de masse moléculaire inférieure ; l'invention vise ainsi à produire à partir des polymères réticulés de départ des fragments solubles et donc utilisables.

Un objectif essentiel de l'invention est de réaliser cette transformation sans destruction totale du polymère, c'est-à-dire en se limitant à un clivage contrôlé de la molécule par rupture de certaines liaisons sans perturber les groupements fonctionnels.

A cet effet, le procédé conforme à l'invention pour traiter des matériaux polymères à base de E.V.A. réticulé consiste :
- à réduire les matériaux polyméres sous forme particulaire,
- à incorporer les particules polymériques obtenues dans un solvant organique adapté pour diffuser à l'intérieur du réseau polymérique du matériau et dilater ledit réseau, ledit solvant étant choisi de nature non dégradable ou peu dégradable par l'ozone,
- à soumettre le milieu réactionnel constitué par le solvant contenant les particules, à un courant d'ozone jusqu'à obtention de la taille souhaitée des fragments polymériques,
- à séparer la phase solide du solvant.

Les expérimentations ont montré que, de façon inattendue, le procédé de l'invention qui opère en phase liquide permet de casser certaines liaisons covalentes de l'E.V.A. réticulé sans en modifier les groupements fonctionnels vinyl acétate. Dans un premier temps, le solvant joue un rôle d'agent de gonflage du matériau réticulé (qui est insoluble en raison de sa réticulation) ; cet agent est aspiré dans le réseau tridimensionnel du polymère qui, en se dilatant, devient accessible à l'action de l'ozone sous forme dissoute. Le solvant joue ensuite le rôle de vecteur d'ozone et l'on a pu constater que la réaction d'ozonation en phase liquide n'est pas exothermique, ce qui explique que certaines liaisons non fonctionnelles soient rompues sans que les groupements fonctionnels soient affectés. A l'issue du traitement, on obtient des fragments polymériques solubles dans les solvants organiques classiques : THF, toluène, benzène, chlorobenzène.

Le solvant utilisé dans le procédé de l'invention est en particulier un solvant aromatique et/ou halogéné du groupe suivant : chlorobutane, 1,1,1-trichloroéthane, dichlorométhane, tétrachlorure de carbone, chlorobenzène. Les particules polymériques sont avantageusement incorporées dans ce solvant dans une plage de concentration comprise entre 10 g/l et 80 g/l. A partir de 80 g/l, le seuil de saturation en polymère réticulé est atteint : la viscosité du milieu étant élevée, la diffusion de l'ozone devient lente, difficile à assurer et non homogène. Au-dessous de 10 g/l, l'on constate un début de destruction du polymère.

Par ailleurs, selon un mode préférentiel de mise en oeuvre qui facilite la récupération des fragments polymériques, après ozonation l'on ajoute au milieu réactionnel un alcool aliphatique en vue de faciliter l'extraction de la phase solide et on procède à la séparation de ladite phase solide par filtration ; le solvant est ensuite séparé de l'alcool par évaporation en vue de son recyclage. L'addition de l'alcool aliphatique favorise la précipitation des fragments polymériques qui sont ainsi beaucoup plus facilement séparés du milieu réactionnel.

De préférence, les matériaux polymériques de départ sont préalablement réduits sous forme de particules ayant une granulométrie moyenne comprise entre 100 et 800 microns. Cette taille paraît correspondre à la meilleure réactivité de l'ozone à l'égard du réseau polymérique.

L'imprégnation par le solvant peut être faite préalablement au passage de l'ozone ou simultanément. Le procédé est mis en oeuvre à une température comprise entre 20° C et 50° C : dans le premier cas, l'on peut choisir une température basse à l'intérieur de cette plage ; dans le second cas, une température supérieure est préférable (40° C-50° C) afin d'accélérer le gonflement et d'homogénéiser l'attaque de l'ozone dès le début de la réaction. De plus, la température d'imprégnation par le solvant est avantageusement comprise entre 30° C et la température de reflux.

Le temps d'imprégnation par le solvant est fonction de la concentration de polymère dans ledit solvant et est, préférentiellement, compris entre 10 et 30 minutes pour la plage de concentration évoquée précédemment, le milieu étant maintenu sous agitation. Le gonflement obtenu correspond, dans ces conditions, à une augmentation du volume du milieu réactionnel d'au moins deux fois le volume initial.

Le courant d'ozone peut être engendré par un bullage du milieu réactionnel avec agitation dudit milieu, ledit bullage étant réalisé à un débit compris entre 30 et 100 mg d'ozone par litre de milieu pendant une durée comprise entre 45 et 300 minutes. Ces plages de débit et de durée correspondent à un bon compromis, permettant d'obtenir une fragmentation efficace du polymère réticulé sans risque de destruction totale des molécules.

Le bullage peut être réalisé au moyen d'un mélange d'oxygène et d'ozone, préparé de façon classique dans un réacteur à plasma froid à partir d'oxygène.

Les matériaux polymères à base d'E.V.A. réticulé présentent généralement des masses moléculaires supérieures à 300 000, ces masses moléculaires pouvant atteindre des valeurs beaucoup plus élevées. Le procédé de l'invention, mis en oeuvre dans les conditions définies précédemment, permet d'obtenir des fragments polymériques de masse moléculaire inférieure à 100 000. Cette masse peut être contrôlé en analysant des échantillons au fur et à mesure de la réaction et en stoppant celle-ci lorsque la masse moléculaire désirée est atteinte. Ce contrôle de la masse moléculaire est en pratique essentiel pour permettre d'adapter le produit obtenu aux applications envisagées.

Le procédé de l'invention peut en particulier être mis en oeuvre pour valoriser des déchets industriels contenant en poids au moins 40 % d'E.V.A. réticulé, ce composé pouvant être associé à des charges minérales et à d'autres polymères réticulés ou non (notamment E.V.A. non réticulé).

L'invention s'étend à des applications spécifiques à l'égard desquelles les fragments polymériques obtenus présentent des propriétés particulièrement intéressantes.

Selon un premier type d'application, ces fragments sont utilisés comme agent texturant de liants hydrocarbonés, notamment bitumineux, auxquels ils sont incorporés à chaud. Cette incorporation permet d'améliorer les propriétés rhéologiques et thermiques du liant (souplesse, élasticité, résistance mécanique, insensibilisation thermique).

Selon un autre type d'application, les fragments obtenus à l'issue du procédé sont utilisés comme agent texturant de granulats traités au liant hydraulique, auxquels ils sont incorporés à froid (amélioration de la souplesse de la grave traitée, limitation de la fissuration).

Les fragments peuvent également être utilisés comme liant d'enrobage de granulés (granulés de nature minérale ou synthétique) en vue de réaliser des enrobés bénéficiant, le cas échéant, d'une pigmentation de la couche d'enrobage. Cet enrobage peut être réalisé à froid, en émulsion ou à chaud.

Les fragments polymériques issus du procédé de l'invention peuvent également être utilisés comme matière première pour fabriquer des semelles de chaussure, ces fragments étant mélangés à d'autres types de polymères (par exemple "styrène butadiène rubber" SBR).

Dans la plupart des applications, avant incorporation, les fragments polymériques seront broyés pour les réduire à une granulométrie moyenne comprise entre 300 et 1000 microns. L'incorporation peut s'effectuer directement à partir des fragments sous forme de poudre, ou bien après solubilisation de ladite poudre ou mise en émulsion de celle-ci.

Les exemples qui suivent illustrent le procédé de l'invention et des applications des fragments polymériques obtenus. Les figures des dessins annexés présentent :

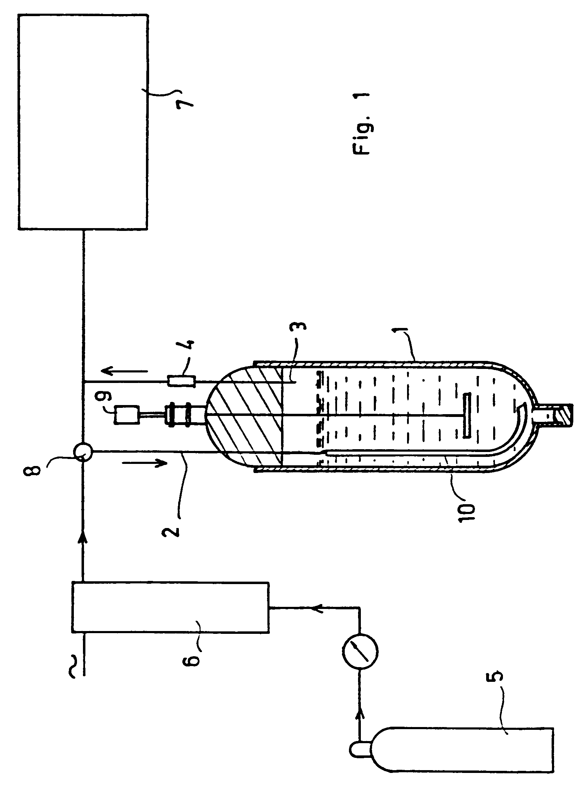

- figure 1 : un schéma de l'installation de mise en oeuvre dudit procédé,
- figure 2 : une courbe obtenue à l'exemple 1 donnant la quantité d'ozone résiduel en fonction du temps d'ozonation.

Le procédé est mis en oeuvre dans un réacteur fermé 1, équipé d'une entrée 2 d'oxygène chargé d'ozone, avec distribution sous forme de petites bulles par un diffuseur 10, et d'une sortie 3 de gaz résiduel dotée d'un condenseur 4. La source d'oxygène est constituée par une bouteille 5 et l'ozone est engendré par un générateur d'ozone 6 de type classique (réacteur à plasma froid).

La sortie 3 est connectée à un analyseur d'ozone 7 de type classique (analyseur à solution d'iodure de potassium). Une dérivation dotée d'une vanne 8 permet, avant le traitement, d'envoyer le gaz d'entrée vers l'analyseur 7 en vue d'une analyse de sa composition.

Le réacteur 1 contient le solvant choisi, auquel sont incorporés les matériaux polymériques à traiter. Le milieu est agité en permanence au moyen d'un agitateur 9. Le réacteur est doté de sorties d'échantillon et d'évacuation.

### Exemple 1

Dans cet exemple, le matériau à base d'E.V.A. réticulé provient de coupes non utilisables de semelles de chaussures (défauts de forme).

Il s'agit d'un mélange contenant 50 à 60 % d'E.V.A. (Ethylène 70 à 80 %, vinyl acétate 30 à 20 %), 10 à 12 % de SBR (Styrène Butadiène Rubber) ou EPDM (Ethylène Propylène Diène Monomère), quelques % de Polyéthylène Glycol (PEG) et d'huiles, 3 à 5 % d'agent vulcanisant : 1,3-ditertbutyl péroxy isopropyl benzène ("Peroximon F40"), des activateurs et des accélérateurs. L'analyse élémentaire a fourni les résultats suivants :
- 65,7 % de carbone
- 10,2 % d'hydrogène
- 7,4 % d'oxygène.

Le produit est broyé à une granulométrie de 500 microns.

Ce produit réticulé (encore qualifié de vulcanisé) a un réseau tridimensionnel de masse moléculaire très élevée : une fraction présente une masse moléculaire de l'ordre de 300 000, l'autre fraction une masse moléculaire très supérieure. Ce produit est très peu soluble dans les solvants organiques classiques.

30 g de ce produit sont mis dans le réacteur 1 avec un litre de tétrachlorure de carbone. Le milieu est porté à reflux (76° C) pendant 15 mn, puis on le laisse refroidir jusqu'à la température de 23° C, avant d'envoyer le flux de gaz. Le débit de gaz vecteur (oxygène) issu de la bouteille 5 est ajusté à 0,4 litre par minute. La tension d'entrée du générateur d'ozone 6 est réglée de façon à délivrer un débit d'ozone de 50 mg par litre.

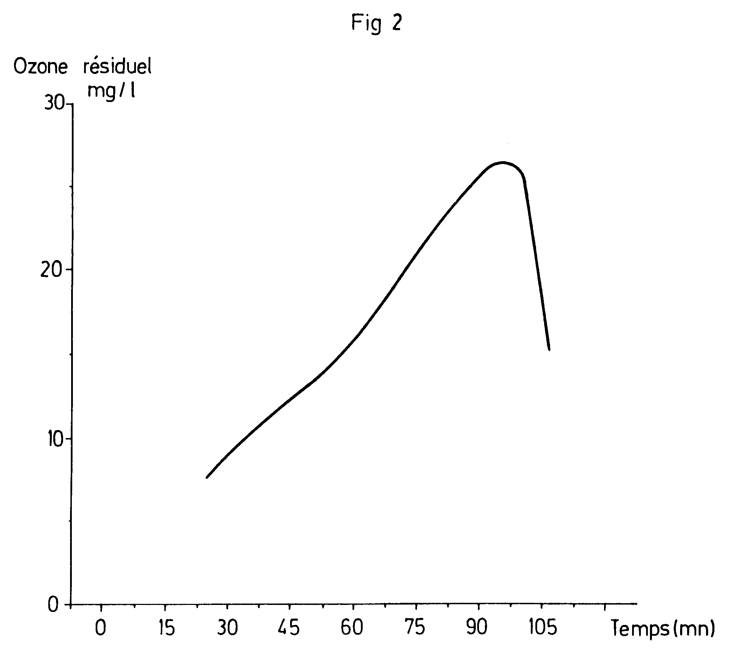

La consommation en ozone est suivie au cours du temps en mesurant la concentration en ozone a la sortie du réacteur 1 ; la figure 2 donne en fonction du temps la concentration d'ozone résiduel dans le gaz.

On observe une consommation importante d'ozone au début de la réaction, liée à la saturation de solvant en ozone et à la réactivité des doubles liaisons éthyléniques présentes dans le matériau polymérique. On constate ensuite une réduction de la consommation d'ozone jusqu'à un minimum au cours duquel la consommation d'ozone dans le réacteur est la plus faible, (ce minimum correspondant à un maximum M d'ozone résiduel.

Ensuite, la consommation en ozone augmente à nouveau. La solubilité maximale du matériau est atteinte dans cette zone, ce qui correspond à un temps de solubilisation de 2 heures.

Le réacteur d'ozonation 1 est alors vidé dans un récipient contenant 1 litre d'alcool aliphatique (éthanol, propanol, isopropanol), en cet exemple l'éthanol ; le matériau à base d'E.V.A. précipite. Il est récupéré par filtration.

Son analyse structurale est effectuée par spectroscopie d'infrarouge, résonance magnétique nucléaire du proton RMN, dosage des péroxydes et hydropéroxydes. On note la présence de fonctions : carbonyles, carboxyles, péroxydes et hydropéroxydes et la préservation des fonctions caractéristiques de l'E.V.A.

Le dosage des péroxydes et hydropéroxydes a été effectué avec le 5-diphényl picrylhydrazine (DPPH) (2). La concentration en péroxyde est égale à 5.10⁻⁴ équivalent-mole par gramme de polymère.

Les résultats de l'analyse élémentaire du matériau après ozonation sont les suivants :
- 61,5 % en carbone
- 9,9 % en hydrogène
- 8,4 % en oxygène.

La masse moléculaire du produit final a été déterminée par chromatographie par perméation de gel avec le tétrahydrofurane comme éluant et un réfractomètre comme détecteur. Sa valeur est de 49 000. La courbe de calibration a été effectuée à partir de polystyrène standard sur une colonne TSK linéaire thermostatée à 40° C.

### Exemple 2

Cet exemple a été mis en oeuvre dans les mêmes conditions que l'exemple 1, seule la concentration initiale en matériau étant amenée à varier. On constate que le temps d'ozonation nécessaire pour obtenir des fragments de masse moléculaire de 49 000 augmente avec la concentration initiale en matériau selon le tableau ci-après :

| | | | |
|---|---|---|---|
| Concentration initiale en matériau (g/l) | 10 | 30 | 40 |
| Temps de solubilisation (mn) | 60 | 120 | 180 |

### Exemple 3

L'exemple 3 a été mis en oeuvre dans les mêmes conditions expérimentales que l'exemple 1 à l'exception de la température d'ozonation qui a été amenée à varier (tableau ci-après).

Les temps de solubilisation diminuent quand la température d'ozonation augmente, pour atteindre la même masse moléculaire finale (49 000).

| | | | | |
|---|---|---|---|---|
| Température d'ozonation (°C) | 23 | 30 | 40 | 50 |
| Temps de solubilisation (mn) | 120 | 110 | 100 | 90 |

### Exemple 4

L'exemple 4 a été mis en oeuvre dans les conditions suivantes :
- quantité de CCl₄ : 1 litre,
- concentration en ozone : 90 mg par litre,
- température : 40° C.

La concentration initiale en matériau a été amenée à varier (tableau ci-après).

Le temps de solubilisation augmente en fonction de la concentration initiale en matériau. On a constaté qu'au-delà d'une concentration initiale en matériau de 75 g/l, le milieu réactionnel devient très visqueux ce qui rend difficile l'obtention du seuil de solubilité maximale. Une concentration de 75 g/l à 80 g/l est donc une valeur à ne pas dépasser en pratique.

| | | | |
|---|---|---|---|
| Concentration initiale en matériau (g/l) | 40 | 60 | 75 |
| Temps de solubilisation (mn) | 165 | 270 | 330 |

### Exemple 5

Cet exemple a été mis en oeuvre dans les mêmes conditions que l'exemple 1 à partir d'un échantillon d'E.V.A. pur vulcanisé. La vulcanisation (ou réticulation) a été effectuée de la façon suivante : 40 g d'un E.V.A. pur (éthylène 78 %, vinyl acétate 20 %) sont dilués dans 150 ml de toluène. On ajoute 2 % de "Péroximon F40" et on agite pendant 30 minutes. Le solvant est évaporé et pompé. La plaque de polymère, ainsi obtenue, est mise dans une étuve à 170° C pendant une heure afin de vulcaniser le matériau.

Le polymère ainsi vulcanisé est broyé jusqu'à atteindre une granulométrie de 500 microns. 30 g de cet échantillon sont introduits dans le réacteur 1 dans les mêmes conditions que celles de l'exemple 1.

Au terme d'une durée d'ozonation de 75 minutes, la masse moléculaire des fragments obtenus (41 000) est proche de celle obtenue à partir des déchets à base d'E.V.A.

### Exemple 6

Les produits utilisés dans cette application sont obtenus dans les conditions de l'exemple 1, à l'exception du temps d'ozonation qui est amené à varier entre 105 et 240 minutes (tableau ci-après).

Chaque produit, sous forme de poudre, est rajouté dans un bitume (grade : 180-220) chauffé à 170° C dans un bain d'huile. Le mélange est agité pendant deux heures, puis mis à l'étuve pendant 24 heures. Les résultats suivants sont obtenus :

| Quantité de polymères dans le bitume (ppc) | Temps d'ozonation (mn) | Température de ramolissement (°C) (bille et anneau) | Pénétrabilité (1/10 mm) |
|---|---|---|---|
| 7 % | 105 | 65 | 88 |
| 7 % | 120 | 62 | 87 |
| 7 % | 165 | 56 | 97 |
| 7 % | 240 | 51 | 107 |
| (Les essais de ramolissement bille et anneau et les essais de pénétrabilité ont été effectués selon les normes NFT 66008 et NFT 66004). | | | |

Après 105 minutes d'ozonation, on obtient un liant bitumineux ayant des qualités similaires au liant obtenu à partir d'E.V.A. pur (température de ramolissement : 63°5 ; pénétrabilité : 84).

A titre de comparaison, le bitume pur du type utilisé (grade 180-220) présente les caractéristiques suivantes : température de ramolissement : 34 à 43°C ; pénétrabilité 180 à 220).

### Exemple 7

Dans cet exemple, les produits obtenus à l'exemple 1 sont utilisés sous forme de poudre comme matière première pour fabriquer des semelles de chaussure. On réalise un mélange contenant en poids :
. 20 % de poudre d'E.V.A. déréticulé selon l'invention,
. 40 % d'E.V.A. pur, sous forme de poudre,
. 10 % à 12 % de SBR pur, sous forme de poudre,
. 20 % à 25 % de charges classiques telles que carbonate de calcium, oxydes de silicium,
. 1 % à 3 % d'agent vulcanisant (peroxyde de benzoyle),
. le cas échéant, des additifs en petite quantité (cire, anti-oxydant...).

Les propriétés mécaniques et rhéologiques des semelles obtenues sont identiques à celles obtenues uniquement à partir des polymères d'E.V.A. pur.

## Revendications

1. Procédé de traitement de matériaux polymères réticulés à base d'E.V.A. (éthylène vinyl acétate) en vue d'obtenir des fragments polymériques de masse moléculaire inférieure à celle des matériaux réticulés de départ, caractérisé en ce qu'il consiste :
- a réduire les matériaux polymères sous forme particulaire,
- à incorporer les particules polymériques obtenues dans un solvant organique adapté pour diffuser à l'intérieur du réseau polymérique du matériau et dilater ledit réseau, ledit solvant étant choisi de nature non dégradable ou peu dégradable par l'ozone,
- à soumettre le milieu réactionnel constitué par le solvant contenant les particules, à un courant d'ozone jusqu'à obtention de la taille souhaitée des fragments polymériques,
- a séparer la phase solide du solvant.

2. Procédé de traitement selon la revendication 1, caractérisé en ce que l'on utilise un solvant aromatique et/ou halogéné du groupe suivant : chlorobutane, 1,1,1-trichloroéthane, dichlorométhane, tétrachlorure de carbone, chlorobenzène.

3. Procédé de traitement selon l'une des revendications 1 ou 2, caractérisé en ce que, après ozonation, on ajoute au milieu réactionnel un alcool aliphatique en vue de faciliter l'extraction de la phase solide et on procède à la séparation de ladite phase solide par filtration, le solvant étant ensuite séparé de l'alcool par évaporation en vue de son recyclage.

4. Procédé de traitement selon l'une des revendications 1, 2 ou 3, caractérisé en ce que l'on réduit les matériaux polymériques de départ sous forme de particules ayant une granulométrie moyenne comprise entre 100 et 800 microns.

5. Procédé de traitement selon l'une des revendications 1, 2, 3 ou 4, caractérisé en ce que l'on incorpore les particules polymériques dans le solvant dans une plage de concentration comprise entre 10 g/l et 80 g/l.

6. Procédé de traitement selon l'une des revendications 1, 2, 3, 4 ou 5, caractérisé en ce qu'on laisse les particules polymériques plongées dans le solvant, sous agitation, pendant une durée comprise entre 10 et 30 minutes jusqu'à obtenir une augmentation du volume du milieu réactionnel d'au moins deux fois le volume initial.

7. Procédé de traitement selon l'une des revendications précédentes, caractérisé en ce que le courant d'ozone est engendré par un bullage du milieu réactionnel avec agitation dudit milieu, ledit bullage étant réalisé à un débit compris entre 30 et 100 mg d'ozone par litre de milieu pendant une durée comprise entre 45 et 300 minutes.

8. Procédé de traitement selon la revendication 7, dans lequel le bullage est réalisé au moyen d'un mélange d'oxygène et d'ozone, préparé dans un réacteur à plasma froid à partir d'oxygène.

9. Procédé de traitement selon l'une des revendications précédentes, caractérisé en ce que la température d'imprégnation par le solvant est comprise entre 30° C et la température de reflux dudit solvant, cependant que la température d'ozonation est comprise entre 20° C et 50° C.

10. Procédé de traitement selon l'une des revendications précédentes, mis en oeuvre sur des matériaux polymères de masse moléculaire supérieure à 300 000, en vue d'obtenir des fragments polymériques de masse moléculaire inférieure à 100 000.

11. Procédé de traitement selon la revendication 10, mis en oeuvre sur des déchets industriels contenant en poids au moins 40 % d'E.V.A., associé à des charges minérales et à d'autres polymères.

12. Application des fragments polymériques à base d'E.V.A. issus du procédé de traitement conforme à l'une des revendications 1 à 11, comme agent texturant de liants hydrocarbonés notamment bitumineux, auxquels ils sont incorporés à chaud.

13. Application des fragments polymériques d'E.V.A. issus du procédé de traitement conforme à l'une des revendications 1 à 11, comme agent texturant de granulats traités au liant hydraulique, auxquels ils sont incorporés à froid.

14. Application des fragments polymériques d'E.V.A. issus du procédé de traitement conforme à l'une des revendications 1 à 11, comme liant d'enrobage de granulés.

15. Application des fragments polymériques d'E.V.A. issus du procédé de traitement conforme à l'une des revendications 1 à 11, comme matière première pour fabriquer des semelles de chaussure.

16. Application selon l'une des revendications 12, 13, 14 ou 15, caractérisée en ce que, préalablement à leur incorporation, les fragments polymériques sont broyés pour les réduire à une granulométrie moyenne comprise entre 300 et 1000 microns.

## Claims

1. Method for treating cross-linked polymeric materials based on EVA (ethylene vinyl acetate) with a view to obtaining polymeric fragments, the molecular weight of which is lower than that of the cross-linked starting materials, characterised in that it consists:
- in reducing the polymeric materials in particulate form,
- in introducing the polymeric particles obtained into an organic solvent capable of diffusing within the polymeric network of the material and of dilating said network, said solvent being selected so as to be of a type which cannot be degraded by ozone, or only degraded to a slight extent,
- in subjecting the reaction medium constituted by the solvent containing the particles to a stream of ozone until the size of the polymeric fragments is as required,
- in separating the solid phase of the solvent.

2. Method of treatment according to Claim 1, characterised in that use is made of an aromatic and/or halogenated solvent of the following group: chlorobutane, 1,1,1-trichloroethane, dichloromethane, carbon tetrachloride, chlorobenzene.

3. Method of treatment according to one of Claims 1 or 2, characterised in that an aliphatic alcohol is added to the reaction medium after ozonisation with a view to facilitating the extraction of the solid phase and in that said solid phase is subjected to separation by filtration, whereupon the solvent is then separated from the alcohol by evaporation with a view to it being recycled.

4. Method of treatment according to one of Claims 1, 2 or 3, characterised in that the polymeric starting materials are reduced in particulate form with a mean granulometric size between 100 and 800 microns.

5. Method of treatment according to one of Claims 1, 2, 3 or 4, characterised in that the polymeric particles are incorporated into the solvent within a concentration range between 10 g/l and 80 g/l.

6. Method of treatment according to one of Claims 1, 2, 3, 4 or 5, characterised in that the polymeric particles are allowed to remain immersed in the solvent for a time between 10 and 30 minutes, during which time they are subject to stirring, until the reaction medium has been caused to increase in volume by at least twice the initial volume.

7. Method of treatment according to one of the preceding Claims, characterised in that the stream of ozone is brought about by bubbling through the reaction medium while stirring said medium, said bubbling-through operation being effected at a rate between 30 and 100 mg ozone per litre of medium during a time between 45 and 300 minutes.

8. Method of treatment according to Claim 7, in which the bubbling-through operation is effected using a mixture of oxygen and ozone prepared within a reactor containing oxygen-based cold plasma.

9. Method of treatment according to one of the preceding Claims, characterised in that the temperature at which impregnation with the solvent takes place amounts to between 30° C and the reflux temperature of said solvent, whereas the ozonisation temperature amounts to between 20° C and 50° C.

10. Method of treatment according to one of the preceding Claims, applied to polymeric materials with a molecular weight higher than 300,000, with a view to obtaining polymeric fragments with a molecular weight lower than 100,000.

11. Method of treatment according to Claim 10 applied to industrial waste containing at least 40% EVA by weight, said EVA being associated with mineral fillers and other polymers.

12. Application of EVA-based polymeric fragments produced by the method of treatment according to one of Claims 1 to 11 as texturing agent for hydrocarbon binders, in particular bituminous binders, in which they are incorporated in the hot state.

13. Application of polymeric EVA fragments produced by the method of treatment according to one of Claims 1 to 11 as texturing agent for granulates treated with hydraulic binder, in which they are incorporated in the cold state.

14. Application of polymeric EVA fragments produced by the method of treatment according to one of Claims 1 to 11 as a binder for coating granulates.

15. Application of polymeric EVA fragments produced by the method of treatment according to one of Claims 1 to 11 as raw material for manufacturing shoe soles.

16. Application according to one of Claims 12, 13, 14 or 15, characterised in that prior to their incorporation the polymeric fragments are crushed in order to reduce them to a mean granulometric size between 300 and 1000 microns.

## Patentansprüche

1. Verfahren zur Behandlung von vernetzten polymeren Stoffen auf der Basis von E.V.A. (Äthylenvinylacetat) zwecks Erzielung polymerer Fragmente mit einem Molekulargewicht, das geringer ist als das der vernetzten Ausgangsstoffe, dadurch gekennzeichnet, daß es die folgenden Stufen umfaßt:
- Zerkleinerung der polymeren Stoffe in Teilchenform,
- Einführung der erzielten polymeren Teilchen in ein organisches Lösungsmittel, das so beschaffen ist, daß es innerhalb des polymeren Netzes des Stoffes diffundiert wird und das besagte Netz ausdehnt, wobei als das besagte Lösungsmittel ein solches gewählt wird, das durch Ozon nicht oder wenig abgebaut wird,
- Einwirkung eines Ozonstroms auf das durch das die Teilchen enthaltende Lösungsmittel gebildete Reaktionsmedium, bis die gewünschte Größe der polymeren Fragmente erreicht ist,
- Trennung der festen Phase des Lösungsmittels.

2. Behandlungsverfahren nach Anspruch 1, dadurch gekennzeichnet, daß von einem aromatischen und/oder halogenierten Lösungsmittel der folgenden Gruppe Gebrauch gemacht wird: Chlorbutan, 1,1,1-Trichloräthan, Dichlormethan, Tetrachlorkohlenstoff, Chlorbenzol.

3. Behandlungsverfahren nach einem der Ansprüche 1 oder 2, dadurch gekennzeichnet, daß nach Ozonisierung dem Reaktionsmedium ein aliphatischer Alkohol zugesetzt wird, um die Extraktion der festen Phase zu erleichtern, daß man die besagte feste Phase durch Filtern trennt und daß das Lösungsmittel anschließend durch Verdampfen von dem Alkohol getrennt wird, damit es wieder verwendet werden kann.

4. Behandlungsverfahren nach einem der Ansprüche 1, 2 oder 3, dadurch gekennzeichnet, daß man die polymeren Auzgangsstoffe in Teilchenform zerkleinert, deren mittlere Korngröße zwischen 100 und 800 Mikron beträgt.

5. Behandlungsverfahren nach einem der Ansprüche 1, 2, 3 oder 4, dadurch gekennzeichnet, daß die polymeren Teilchen innerhalb einer Konzentrationsspanne zwischen 10 g/l und 80 g/l in das Lösungsmittel eingeführt werden.

6. Behandlungsverfahren nach einem der Ansprüche 1, 2, 3, 4 oder 5, dadurch gekennzeichnet, daß man die polymeren Teilchen während einer Zeitspanne zwischen 10 und 30 Minuten unter Rühren in dem Lösungsmittel untergetaucht beläßt, bis das Volumen des Reaktionsmediums mindestens eine dem doppelten Ausgangsvolumen entsprechende Zunahme erfahren hat.

7. Behandlungsverfahren nach einem der vorstehenden Ansprüche, dadurch gekennzeichnet, daß der Ozonstrom durch Durchblasen des Reaktionsmediums unter Rühren des besagten Mediums bewirkt wird, wobei der besagte Durchblasvorgang mit einem Durchsatz zwischen 30 und 100 mg Ozon je Liter Medium während einer Zeitspanne zwischen 45 und 300 Minuten durchgeführt wird.

8. Behandlungsverfahren nach Anspruch 7, bei dem der Durchblasvorgang mit Hilfe eines Gemisches von Sauerstoff und Ozon bewirkt wird, das in einem Reaktionsgefäß mit auf Sauerstoff basierendem kaltem Plasma hergestellt wird.

9. Behandlungsverfahren nach einem der vorstehenden Ansprüche, dadurch gekennzeichnet, daß die Temperatur der Lösungsmittelimpregnation zwischen 30° C und der Rückflußtemperatur des besagten Lösungsmittels beträgt, wohin gegen die Ozonisierungstemperatur zwischen 20° C und 50° C beträgt.

10. Behandlungsverfahren nach einem der vorstehenden Ansprüche, angewandt auf polymere Stoffe, deren Molekulargewicht höher ist als 300 000, zwecks Erzielung von polymeren Fragmenten mit einem Molekulargewicht von weniger als 100 000.

11. Behandlungsverfahren nach Anspruch 10, angewandt auf Industrieabfälle, die mindestens 40% E.V.A. nach Gewicht enthalten, wobei das E.V.A. mit mineralischen Füllstoffen und anderen Polymeren verbunden ist.

12. Anwendung von mit Hilfe des Behandlungsverfahrens nach einem der Ansprüche 1 bis 11 erzielten polymeren Fragmenten auf der Basis von E.V.A. als Texturiermittel für Kohlenwasserstoffbindemittel, insbesondere bituminöser Art, in die sie im heißen Zustand einverleibt werden.

13. Anwendung von durch das Behandlungsverfahren nach einem der Ansprüche 1 bis 11 erzielten polymeren E.V.A.-Fragmenten als Texturiermittel für mit hydraulischem Bindemittel behandelte Granulate, in die sie in kaltem Zustand einverleibt werden.

14. Anwendung von durch das Behandlungsverfahren nach einem der Ansprüche 1 bis 11 erzielten polymeren E.V.A.-Fragmenten als Bindemittel zur Umhüllung von Granulaten.

15. Anwendung von durch das Behandlungsverfahren nach einem der Ansprüche 1 bis 11 erzielten polymeren E.V.A.-Fragmenten als Rohstoff für die Herstellung von Schuhsolen.

16. Anwendung nach einem der Ansprüche 12, 13, 14 oder 15, dadurch gekennzeichnet, daß die polymeren Fragmente vor ihrer Einverleibung gemahlen werden, um sie auf eine mittlere Korngröße zwischen 300 und 1000 Mikron zu zerkleinern.
